(19) Europäisches Patentamt
European Patent Office
Office européen des brevets

(11) **EP 2 517 344 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(51) Int Cl.:
*H02M 3/158* (2006.01)　　*H02M 1/42* (2007.01)
*H02J 3/38* (2006.01)

(21) Anmeldenummer: **10766210.8**

(22) Anmeldetag: **12.10.2010**

(86) Internationale Anmeldenummer:
**PCT/CH2010/000251**

(87) Internationale Veröffentlichungsnummer:
**WO 2012/006746 (19.01.2012 Gazette 2012/03)**

(54) **BIDIREKTIONALER DC-STELLER MIT PUFFERKONDENSATOR UND REGELBARER SPANNUNG ÜBER DEM KONDENSATOR**

BIDIRECTIONAL DC CONVERTER WITH BUFFER CAPACITOR AND CONTROLLABLE VOLTAGE AT THE CAPACITOR

CONVERTISSEUR CONTINU-CONTINU BIDIRECTIONNEL AVEC CONDENSATEUR BUFFER ET SA TENSION RÉGLABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2010　CH 11562010**

(43) Veröffentlichungstag der Anmeldung:
**31.10.2012　Patentblatt 2012/44**

(73) Patentinhaber: **Woodward IDS Switzerland AG**
**8050 Zürich (CH)**

(72) Erfinder: **STOEV, Alexander**
**CH-8127 Forch (CH)**

(74) Vertreter: **Rentsch Partner AG**
**Rechtsanwälte und Patentanwälte**
**Fraumünsterstrasse 9**
**Postfach 2441**
**8022 Zürich (CH)**

(56) Entgegenhaltungen:
**EP-A2- 2 173 024　　WO-A1-2010/069620**

• **HASHIMOTO O ET AL: "A novel high performance utility interactive photovoltaic inverter system", INDUSTRY APPLICATIONS CONFERENCE, 2000. CONFERENCE RECORD OF THE 2000 IEEE 8-12 OCTOBER 2000, PISCATAWAY, NJ, USA,IEEE, Bd. 4, 8. Oktober 2000 (2000-10-08), Seiten 2255-2260, XP010522571, ISBN: 978-0-7803-6401-1**

EP 2 517 344 B1

**Beschreibung**

**FELD DER ERFINDUNG**

Die vorliegende Erfindung bezieht sich auf das Gebiet Leistungselektronik; sie betrifft einen bidirektionalen DC-Stelter nach dem Oberbegriff des Anspruchs 1.

**HINTERGRUND DER ERFINDUNG**

Konventionelle DC-Quellen umfassen beispielsweise Batterien oder eine Anzahl Solarpanels, welche seriell zu so genannten Strings zusammengeschaltet sind, so dass die Stringspannung Ust der Summe der Spannungen (DC-Quellenspannungen Ust1, Ust2) der Anzahl seriell geschalteter Solarpanels (DC-Quellen) entspricht. Ein von einem Verbraucher belasteter String erzeugt einen Stringstrom Ist und eine String-Leistung Ppv. Eine Belastungsvorrichtung für den String wird auch Tracker genannt und wird oft durch einen elektronischen Aufwärtssteller realisiert. Der Aufwärtssteller (Tracker) stellt idealerweise den Stringstrom Ist so ein, dass die maximale Energie von dem String generiert werden kann; dieser Arbeitspunkt wird "Maximum Power Point" (MPP) genannt. Solche "Maximum-Power-Point-Aufwärtssteller" (MPP-Tracker) werden zum Hochsetzen der Stringspannung Ust so ausgeführt, dass die Stringspannung Ust zu einer konstanten Ausgangsspannung Udc des Aufwärtsstellers (auch "Booster" genannt) führt. Bekanntermassen weisen die DC-Quellenspannungen Ust1, Ust2 eine hohe Varianz auf; die Höhe der DC-Quellenspannung Ust1, Ust2 hängt zum einen von der Temperatur der Solarpanels und zum anderen von der Dichte der Sonnenstrahlung ab -je tiefer die Temperatur der Zellen und je höher die Dichte der Strahlung sind, desto höher ist die Spannung einzelner Solarzellen und damit der DC-Quellenspannungen Ust1, Ust2. Die DC-Quellenspannungen Ust1, Ust2 variieren im Betrieb von - 40% bis + 40% ihres Nennwertes.

Ein dem Aufwärtssteller nachgeschalteter DC/AC-Konverter wandelt die Ausgangsspannung Udc an seinem Eingang in eine für Stromversorgungsnetze konforme AC-Spannung an seinem Ausgang mit einem Effektivwert Uac um. Der DC/AC-Konverter speisst die Energie der DC-Quellen ins Stromversorgungsnetz ein, vorausgesetzt die Ausgangsspannung Udc des Aufwärtsstellers erfüllt die Bedingung

$$Udc > \sqrt{2} * Uac = 1.42 * Uac;$$

mit Udc als Ausgangsspannung des Aufwärtsstellers und Uac als Effektivwert der Netzspannung des Stromversorgungsnetzes.

Wenn die Energieabgabe einer DC-Quelle -Beispiel Solarpanel- nachlässt oder wenn eine DC-Quelle -Beispiel Batterie- teilentladen ist, benötigt man Aufwärtssteller, um die Ausgangsspannung Udc auf den erforderlichen Wert anzuheben, damit weiterhin eine Einspeisung ins Stromversorgungsnetz über den DC/AC-Konverter möglich ist

Aufbau und Wirkungsweise konventioneller Aufwärtssteller:

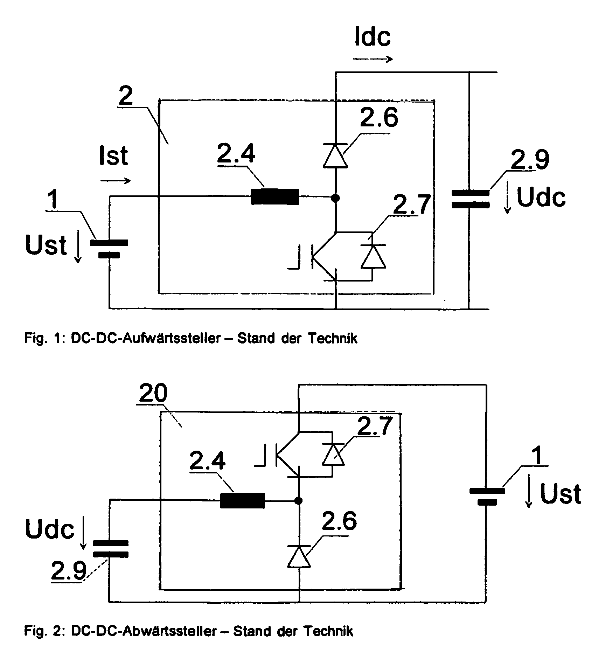

Ein herkömmlicher Aufwärtssteller 2 -wie beispielhaft in fig. 1 gezeigt- für das Hochsetzen der DC-Quellenspannung einer DC-Quelle 1 umfasst im Wesentlichen eine Speicherdrossel 2.4, einen elektronischen Schalter 2.7, eine Diode 2.6 und einen Ausgangskondensator 2.9. Der elektronische Schalter 2.7 ist dabei aus einem Transistor mit antiparalleler Diode ausgeführt. Beispiele solcher Aufwärtssteller findet man unter dem Begriff "Aufwärtswandler" bei "www.wikipedia.org" bzw. in einem Skript mit Fistel "Vorlesung Schaltnetzteile" von Prof. Schmidt-Walter, Hochschule Darmstadt, Deutschland" (http://schmidt-watter.eit.h-da.de/smps/smps.html).

Die DC-Quellenspannung Ust der DC-Quelle ist kleiner als die Ausgangsspannung Udc über dem Ausgangskondensator 2.9. Wenn der Schalter 2.7 eingeschaltet ist, fliesst ein Strom Ist in die Speicherdrossel 2.4, die entsprechende Energie des Stroms Ist wird in der Speicherdrossel 2.4 gespeichert. Anschliessend öffnet der Schalter 2.7 und die gespeicherte Energie der Speicherdrossel 2.4 wird über die Diode 2.6 in den Ausgangskondensator 2.9 eingeleitet - es fliesst der DC-Strom Idc. Der Ausgangskondensator 2.9 wird auch DC-Bus-Kondensator genannt. Der Ausgangsstrom Idc wird durch das Ein- und Ausschalten (Modulation) des Schalters (2.7) gesteuert (Puls-Weiten-Modulation PWM).

Aufbau und Wirkungsweise konventioneller Abwärtssteller:

Den Aufbau eines Abwärtsstellers -wie ihn Fig. 2 zeigt- findet man unter dem Begriff "Abwärtswandler" bei "www.wikipedia.org" bzw. in einem Skript mit Titel "Vorlesung Schaltnetzteile" von Prof. Schmidt-Walter, Hochschule Darmstadt, Deutschland" (http//schmidt-walter.eit.h-da.de/smps/smps.html).

Im Unterschied zum vorgängig beschriebenen Aufwärtssteller weisen bekannte Abwärtssteller 20 eingangsseitig eine DC-Quelle 1 auf und parallel dazu einen Schalter 2.7 in Reihe zu einer Diode 2.6; parallel zu dieser Diode 2.6 sind eine Speicherdrossel 2.4 und ein Ausgangskondensator 2.9 seriell angeordnet. Die DC-Quellenspannung Ust der DC-Quelle des Abwärtsstellers 20 ist grösser als die Ausgangsspannung Udc über dem Kondensator 2.9. Wenn der Schalter 2.7 eingeschaltet ist, fliesst ein Strom in die Speicherdrossel 2.4, die diesem Strom entsprechende Energie wird in der Speicherdrossel gespeichert. Anschliessend öffnet der Schalter 2.7 und die gespeicherte Energie wird über die Diode 2.6 in den Kondensator 2.9 eingeleitet.

Aufbau und Wirkungsweise konventioneller, bidirektionaler DC-Steller:

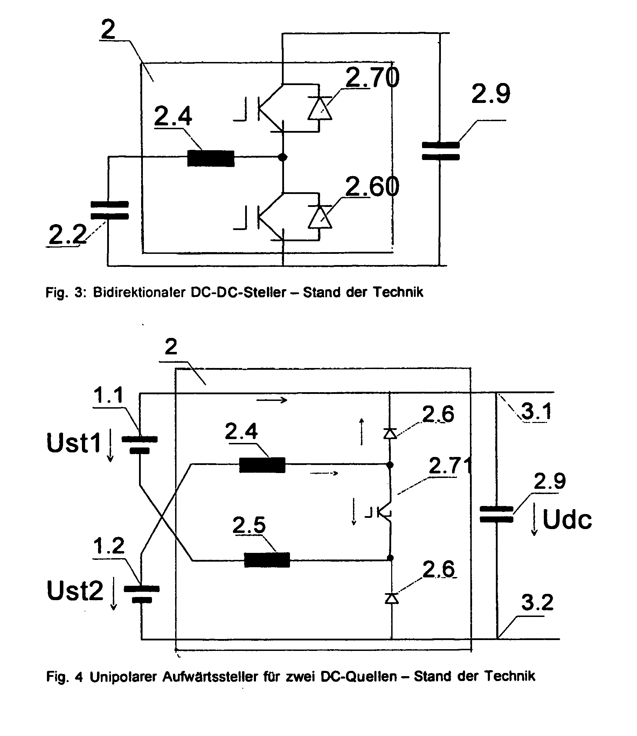

Durch die Kombination der Schaltungen eines Aufwärtsstellers (Fig. 1) und eines Abwärtsstellers (Fig. 2) gelangt man zu dem Aufbau bekannter, bidirektionaler DC-Steller, wie ihn Fig. 3 zeigt. Solche DC-Steller umfassen einen ersten Kondensator 2.2 und einen zweiten Kondensator 2.9, die in Abhängigkeit der Energieflussrichtung als DC-Quelle und Ausgangskondensator fungieren bzw. als Ausgangskondensator und DC-Quelle wirken. Ein erster Schalter 2.60 und ein zweiter Schalter 2.70 sind seriell geschaltet und parallel zum zweiten Kondensator 2.9 angeordnet. Parallel zum ersten Schalter 2.60 ist eine Reihenschaltung einer Speicherdrossel 2.4 und des ersten Kondensators 2.2 angeordnet Die beiden Schalter 2.60 und 2.70 sind aus Transistoren mit antiparallelen Dioden aufgebaut. Dadurch kann der bidirektionale DC-Steller Energie in beiden Richtungen zwischen dem ersten und zweiten Kondensatore 2.2 und 2.9 umwandeln. Bei sokhen DC-Stellern kann als nachteilig angesehen werden, dass die gesamte Energie durch die Schalter 2.60 und 2.70 konvertiert wird und die Speicherdrossel 2.4 die gesamte Energie während der Konvertierung speichern muss.

Die Literatur zeigt viele Varianten solcher DC-Steller auf, denen allen gemeinsam ist, die gesamte Energie über Schalter und Speicherdrosseln zu konvertieren: So stellt die DE 10 2004 037 446 B4 (Trafoloser Wechselrichter für solare Netzeinspeisung) einen repräsentativen Stand der Technik bezüglich Aufwärtssteller dar. Hier ist ein symmetrischer DC-Steller -ähnlich Fig. 3- gezeigt, der allerdings die gesamte DC-Quellenspannung umsetzt. Der Ausgangskondensator 2.9 ist dabei in zwei in Reihe geschaltete Ausgangsteilkondensatoren aufgeteilt, deren Mittelpunkt geerdet ist

Die WO 2006/011071 (3-phase Solar Converter Circuit and Method) enthält einen Aufwärtssteller in konventioneller Ausführung für die gesamte DC-Quellerleistung, wobei hier der Schwerpunkt auf der Ansteuerung des Netzumrichters liegt

Die EP 2 148 419 A2 (Stromrichteranordnung für Solarstramanlagen und Ansteuerverfahren hierzu) beschreibt einen symmetrischen Aufwärtssteller (ähnlich DE 10 2004 037 446 B4). Die KR 2009 0128973 behandelt weitere verschiedene Schaltungsanordnungen für Aufwärtssteller.

Die DE 10 2008 059330 (Kompakter Dreiphasen-Wechselrichter mit vorgeschaltetem integriertem Aufwärtssteller) beschreibt eine Wechselrichtereinheit mit Eingangs-Aufwärtssteller für Solar-Anwendungen. Der Aufwärtssteller ist konventionell aufgebaut, der eigentliche Gegenstand dieser Druckschrift sind verschiedene Konfigurationen des Wechselrichters.

Die Druckschrift US 2010 133904 (DC bus voltage control for two stage solar converter) umfasst die Gesamtanordnung Aufwärtssteller mit nachgeschaltetem DC/AC-Konverter wobei der Aufwärtssteller ebenfalls die gesamte Leistung konvertiert.

Allen hier vorgestellten Aufwärtsstellern ist gemeinsam, dass sie grosse und aufwendige Schaltungen umfassen können, eine unerwünscht hohe Verlustenergie aufweisen, namentlich gehen etwa 2% der Solarenergie in solchen Aufwärtsstellern verloren, wobei diese Verlustenergie, die als Wärme auftritt, zudem über entsprechende Kühlsysteme abgeführt werden muss.

In der EP 2 173 024 A2 wird eine Anordnung für die unipolare Hochstellung der DC-Quellenspannung von zwei DC-Quellen mit einem Aufwärtssteller vorgeschlagen -wie in Fig. 4 beispielhaft gezeigt- wobei dieser Aufwärtssteller zwei symmetrische Speicherdrosseln 2.4 und 2.5, sowie zwei Dioden 2.6 und einen unipolaren Schalter 2.71 benötigt. Eine erste DC-Quelle 1.1 und eine zweite DC-Quelle 1.2 sind über einen Schalter 2.71 in Serie geschaltet. Der Schalter 2.71 ist beidseitig mit den beiden Dioden 2.6 zu einem DC-Ausgang 3.1, 3.2 verbunden, wobei dieser DC-Ausgang mit einem Ausgangskondensator 2.9 abgestützt ist.

Der Strom, welcher beim Einschalten von Schalter 2.71 fliesst, ist unipolar und wird in den Speicherdrosseln 2.4, 2.5 gespeichert. Beim Öffnen des Schalters 2.71 gelangt der in den Speicherdrosseln gespeicherte Strom über die beiden Dioden 2.6 zum DC-Ausgang; zudem fliesst parallel ein unipolarer Gleichstrom von den DC-Quellen 1.1, 1.2 direkt zum DC-Ausgang 3.1, 3.2. Der Schalter 2.71, die Dioden 2.6 und die Speicherdrosseln 2.4, 2.5 leiten somit nur einen Teil des gesamten Gleichstroms, der andere Teil gelangt direkt zum DC-Ausgang. Damit können bis zu 50% der Verluste eingespart werden, so dass die Speicherdrosseln 2.4, 2.5, die Dioden 2.6 und der Schalter 2.71 elektrisch und damit auch räumlich kleiner dimensioniert werden können. Auf der anderen Seite können Oberwellen, elektromagnetische Strahlung, sowie der begrenzte Spannungsbereich im Betrieb als Aufwärtssteller als nachteilig angesehen werden.

Wenn der Schalter 2.71 schaltet entstehen hochfrequente Wechselspannungen mit der Amplitude der DC-Spannung. Wenn die DC-Quellen aus Solarpanels bestehen, können Störspannungen mit Amplituden von 1000V und Frequenzen im kHz-Bereich auftreten, was die meisten Solarpanels nicht vertragen. Da die Zuleitungen zwischen den DC-Quellen 1.1, 1.2 und dem Aufwärtssteller 2 lang sein können, führen hier ungefilterte hochfrequente Ströme und Spannungen in diesen Zuleitungen zu unerwünschten elektromagnetischen Störungen (EMV) in der Umgebung. Ferner kann dieser Aufwärtssteller nur dann funktionieren, wenn die Summe beider DC-Quellenspannungen Ust1 und Ust2 grösser gleich der Ausgangsspannung Udc ist. Falls der Stromfluss bei kleinerer Summen-DC-Quellenspannung kehrt, können die Dioden 2.6 den Strom nicht übernehmen, die Umwandlung stoppt. Hinzu kommt, dass die Spannung über dem Schalter 2.71 in diesem Fall ebenfalls umkehrt. Der Schalter 2.71 kann in diesem Betriebsfall nicht gesteuert werden, er ist entweder dauernd eingeschaltet oder dauernd ausgeschaltet

Wenn mehrere DC-Ouellen in Form von Solarpanels oder in Serie geschalteten Solarpanels (Strings) parallel zu einem so genannten Multi-String zusammengeschaltet sind, wird allen Solarpanels bzw. Strings die gleiche Ausgangsspannung Udc aufgezwungen. Beim Betrieb eines Multi-Strings kann allerdings eine Abschattung bzw. ein Ausfall einzelner Solarpanels zu einer Abschaltung des gesamten betroffenen Multi-Strings führen, das heisst, es kommt zu signifikanten Leistungsausfällen. Es kann sogar zur Rückspeisung von Energie benachbarter Solarpanels zu einem abgeschatteten Solarpanel kommen. Durch Abschattung und durch Alterung einzelner Solarpanels können die oben bereits angesprochenen Arbeitspunkte "Maximum Power Points" (MPP) der einzelnen Solarpanels voneinander abweichen. Diese Abweichungen können aber bei Multi-Strings nicht individuell berücksichtigt werden, da keine Regelung der Leistung einzelner Solarpanels vorgesehen ist. Eine Lösung dieses Problems wäre, jedem einzelnen Solarpanel oder String einen Aufwärtssteller zuzuordnen, was aus Kostengründen nicht praktikabel erscheint. Hinzu kommt, dass die Aufwärtssteller bis zu 1.5% der Nennleistung als Verluste aufweisen, das heisst, viel Solarenergie verbrauchen und zudem ein aufwendiges Temperaturmanagement benötigen. Ein Beispiel einer solchen Schaltung zeigt die DE 101 36 147 B4 (Photovoltaischer Wechselstromerzeuger).

Die JP 9261949 (DC/DC Converter and Solar Generation System) begegnet dem Problem, dass Multi-Strings unterschiedliche Anzahlen von Solarpanels aufweisen können, bzw. Solarpanels durch Abschattung unwirksam werden, in der Weise, dass dem Multi-String mit weniger Solarpanels ein "weiterer" Aufwärtssteller zugeordnet wird, der die Ausgangsspannung Udc entsprechend anpasst. Mit dieser Anordnung kann nicht flexibel auf temporär unterschiedliche Spannungsverhältnisse innerhalb eines Multi-Strings reagiert werden, es sei denn, der "weitere" Aufwärtssteller ist in allen Solarpanels vorhanden, was den Aufwand entsprechend unerwünscht erhöhen würde.

## DARSTELLUNG DER ERFINDUNG

Es ist daher Aufgabe der Erfindung, eine neuartige Schaltungsanordnung vorzuschlagen, die die Eigenschaften eines Aufwärts- und Abwärtsstellers für zwei DC-Quellen in sich vereint und einen bipolaren Betrieb ermöglicht, wobei die in der Einleitung zum Stand der Technik aufgezeigten Nachteile behoben werden sollen; dabei sollen sowohl die Oberwellen mit hohen Spannungsspitzen und die damit verbundene elektromagnetische Strahlung bekannter Schaltungen massgeblich reduziert werden und die unerwünschte Verlustenergie verringert werden.

Die der Erfindung zugrunde liegende Aufgabe für einen bidirektionalen DC-Steller wird durch die Gesamtheit der Merkmale des Anspruchs 1 gelöst. Weitere Ausführungsformen sind Gegenstand der abhängigen Ansprüche 2 bis 10.

Der erfindungsgemässe bidirektionaler DC-Steller für die Wandlung von elektrischer Energie einer ersten DC-Quelle und einer zweiten DC-Quelle umfasst einen Ausgangskondensator, wobei ein positiver Kontakt der ersten DC-Quelle mit einem positiven DC-Ausgang des bidirektionalen DC-Stellers und einem Anschluss des Ausgangskondensators verbunden ist, und ein negativer Kontakt der zweiten DC-Quelle mit einem negativen DC-Ausgang des bidirektionalen DC-Stellers und dem zweiten Anschluss des Ausgangskondensators verbunden ist, an welchem eine Ausgangsspannung Udc anliegt, wobei eine erste Speicherdrossel zwischen einem positiven Anschluss der zweiten DC-Quelle und einem ersten Kontakt eines ersten elektronischen Schalters angeordnet ist, und wobei die zweite Speicherdrossel zwischen einem negativen Anschluss der ersten DC-Quelle und einem zweiten Kontakt des ersten elektronischen Schalters angeordnet ist.

Wesentlich dabei ist, dass zwischen dem negativen Ausgang der ersten DC-Quelle und dem positiven Ausgang der zweiten DC-Quelle ein Pufferkondensator angeordnet ist, und dass in Serie zum ersten elektronischen Schalter ein zweiter elektronsicher Schalter und ein dritter elektronischer Schalter angeordnet sind, wobei der zweite elektronische Schalter zwischen dem ersten Kontakt des ersten elektronischen Schalters und dem positiven DC-Ausgang angeordnet ist und der dritte elektronische Schalter zwischen dem zweiten Kontakt des ersten elektronischen Schalters und dem negativen DC-Ausgang angeordnet ist.

Diese erfindungsgemässe Schaltungsanordnung für den bidirektionalen DC-Steller wird im Folgenden auch als Differenzsteller oder D-Steller bezeichnet.

Mit Vorteil bilden der Pufferkondensator und der Ausgangskondensator mit den beiden Speicherdrosseln einen Filterkreis, womit beim Betrieb des Differenzstellers eine signifikante Reduktion von Strom- und Spannungsoberwellen erzielt wird; diese Oberwellenreduktion verkleinert bekannte Störungen an den DC-Quellen und zudem die an die Umgebung durch herkömmliche Schaltungen abgegebene EMV-Strahlung. Die Verlustleistung ist gegenüber herkömmlichen Schaltungen geringer, da nur ein Teil der DC-Leistung über die Speicherdrosseln und die elektronischen Schalter geführt wird, und ein weiterer Teil direkt von den DC-Quellen zum DC-Ausgang gelangt. Die Reihenschaltung des Pufferkondensators zu den DC-Quellen ermöglicht einen gegenüber herkömmlichen Schaltungen erweiterten Spannungsbereich, da durch die Reihenschaltung des Pufferkondensators zu den DC-Quellen die Summe der DC-Quellenspannungen kleiner oder grösser als die Ausgangsspannung Udc sein kann.

Die auf Grund des erweiterten Spannungsbereichs mögliche höhere Ausgangsspannung Udc ermöglicht in einer dem Differenzsteller nachgeschalteten Wechselrichterschaltung in der Folge eine höhere Ausgangswechselspannung, was bei gleicher Ausgangsleistung einen kleineren Ausgangsstrom bewirkt; hierdurch kann auch ausgangsseitig die Verlustleistung in Übergangsleitungen reduziert werden.

Durch Einschalten und Ausschalten des ersten, zweiten bzw. dritten elektronischen Schalters ist eine Differenzspannung Ud über dem Pufferkondensator regelbar und ferner ein erster DC-Strom der ersten DC-Quelle und ein zweiter DC-Strom der zweiten DC-Quelle von der ersten und zweiten DC-Quelle zum DC-Ausgang bzw. vom DC-Ausgang zu der ersten und zweiten DC-Quelle einstellbar. Des Weiteren sind die Spannungen Ust1, Ust2 der ersten und der zweiten DC-Quelle von Null bis zum maximalen Wert der Ausgangsspannung Udc variabel, und ferner können ein Ausgangsstrom Idc am positiven bzw. negativen DC-Ausgang, der erste und der zweite Differenzstrom Id1, Id2 und die Differenzspannung Ud positive oder negative Werte annehmen.

Zwei zusätzliche Kondensatoren, nämlich ein erster zwischen dem positiven Anschluss der ersten DC-Quelle und dem positiven Anschluss der zweiten DC-Quelle und ein zweiter Kondensator zwischen dem negativen Anschluss der ersten DC-Quelle und dem negativen Anschluss der zweiten DC-Quelle verbessern in einer Ausführungsform der Erfindung die bereits oben angesprochene Filterwirkung für die Oberwellen.

Weitere Ausführungsformen des erfindungsgemässen bidirektionalen DC-Stellers sind Gegenstand der abhängigen Ansprüche und werden in der detaillierten Beschreibung der Figuren näher beleuchtet

## KURZBESCHREIBUNG DER FIGUREN

Die Erfindung soll nachfolgend anhand von Ausführungsbeispielen im Zusammenhang mit der Zeichnung näher erläutert werden.

Es zeigen:

Fig. 1     einen DC-DC-Aufwärtssteller gemäss dem Stand der Technik;

Fig. 2     DC-DC-Abwärtssteller gemäss dem Stand der Technik;

Fig. 3     einen bidirektionalen DC-DC-Steller gemäss dem Stand der Technik;

Fig. 4     einen unipolaren Aufwärtssteller für zwei DC-Quellen gemäss dem Stand der Technik;

Fig. 5     einen bidirektionalen DC-Steller (Differenzsteller, D-Steller) gemäss der Erfindung;

Fig. 6     eine Ausführungsform des erfindungsgemässen bidirektionalen DC-Stellers mit zusätzlichen Kondensatoren;

Fig. 7     eine weitere Ausführungsform des erfindungsgemässen bidirektionalen DC-Stellers mit elektronischen Schaltern;

Fig. 8     eine weitere Ausführungsform des erfindungsgemässen bidirektionalen DC-Stellers, ebenfalls mit elektronischen Schaltern;

Fig. 9     eine weitere Ausführungsform des erfindungsgemässen bidirektionalen DC-Stellers mit zu einem Ausgangskondensator parallel angeordneten Dioden; und

Fig. 10    mehrere bidirektionale DC-Steller gemäss der Erfindung an einem DC-Bus mit einem zentralen DC/AC Konverter.

## DETAILLIERTE BESCHREIBUNG BEVORZUGTER AUSFÜHRUNGSFORMEN

Die Fig. 1 bis 4 sind dem Stand der Technik entnommen und bereits in der vorstehenden Einleitung gewürdigt worden.

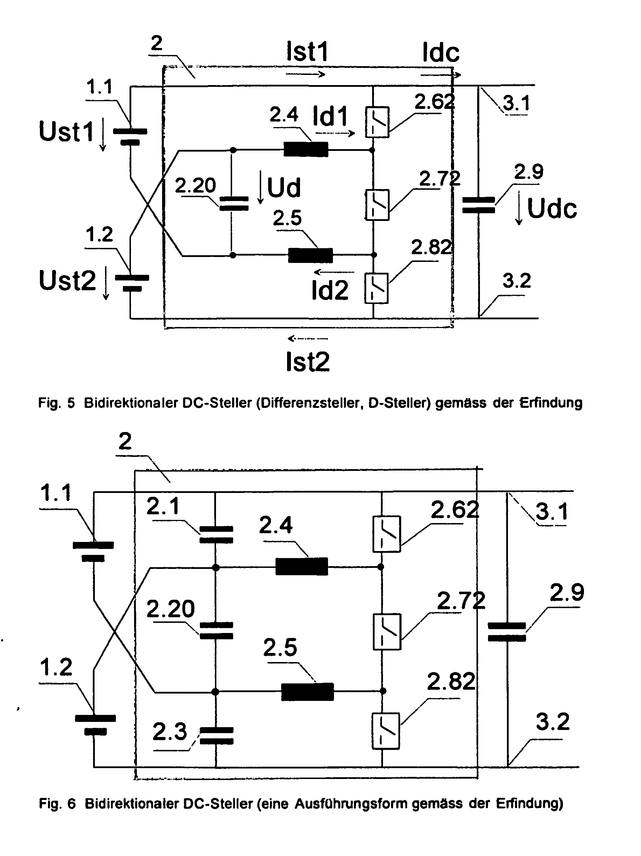

Fig. 5 zeigt anhand eines Blockschaltbilds den erfindungsgemässen bidirektionalen DC-Steller für die Wandlung von elektrischer Energie. Hierfür weist dieser -im folgenden auch kurz Differenzsteller genannte- bidirektionale DC-Steller auf der einen Seite eine erste DC-Quelle 1.1 und eine zweite DC-Quelle 1.2 auf und auf der anderen Seite einen Ausgangskondensator 2.9; obwohl hier von einem Ausgangskondensator 2.9 gesprochen wird, soll dies nicht bedeuten, dass eine Energieflussrichtung ausschliesslich von den DC-Quellen 1.1, 1.2 in Richtung Ausgangskondensator 2.9 möglich ist; im Sinne der Erfindung ist durch entsprechende Regelung -die unten stehend beschrieben wird- und bei unveränderter Schaltungsanordnung ein umgekehrter Energiefluss möglich, und zwar vom Ausgangskondensator 2.9 in Richtung der DC-Quellen 1.1, 1.2.

Ein positiver Kontakt der ersten DC-Quelle 1.1 ist mit einem positiven DC-Ausgang 3.1 des bidirektionalen DC-Stellers und einem Anschluss des Ausgangskondensators 2.9 verbunden und ein negativer Kontakt der zweiten DC-Quelle 1.2 mit einem negativen DC-Ausgang 3.2 des bidirektionalen DC-Stellers und dem zweiten Anschluss des Ausgangskondensators 2.9, an welchem eine Ausgangsspannung Udc anliegt.

Ferner umfasst der Differenzsteller eine erste und eine zweite Speicherdrossel 2.4, 2.5, wobei die erste Speicherdrossel 2.4 zwischen einem positiven Anschluss der zweiten DC-Quelle 1.2 und einem ersten Kontakt eines ersten elektronischen Schalters 2.72 angeordnet ist, und wobei die zweite Speicherdrossel 2.5 zwischen einem negativen Anschluss der ersten DC-Quelle 1.1 und einem zweiten Kontakt des ersten elektronischen Schalters 2.72 angeordnet ist.

Zwischen dem negativen Ausgang der ersten DC-Quelle 1.1 und dem positiven Ausgang der zweiten DC-Quelle 1.2 ist ein Pufferkondensator 2.20 angeordnet und in Serie zum ersten elektronischen Schalter 2.72 ein zweiter elektronsicher Schalter 2.62 und ein dritter elektronischer Schalter 2.82, wobei der zweite elektronische Schalters 2.62 zwischen dem ersten Kontakt des ersten elektronischen Schalters 2.72 und dem positiven DC-Ausgang 3.1 angeordnet ist und der dritte elektronische Schalter 2.82 zwischen dem zweiten Kontakt des ersten elektronischen Schalters 2.72 und dem negativen DC-Ausgang 3.2 angeordnet ist

Durch Einschalten und Ausschalten des ersten, zweiten bzw. dritten elektronischen Schalters 2.72, 2.62, 2.82 ist eine Differenzspannung Ud über dem Pufferkondensator 2.20 regelbar und zudem ein erster DC-Strom Ist1 der ersten DC-Quelle 1.1 und ein zweiter DCStrom Ist2 der zweiten DC-Quelle 1.2 von der ersten und zweiten DC-Quelle 1.1, 1.2 zum DC-Ausgang 3.1, 3.2 bzw. vom DC-Ausgang 3.1, 3.2 zu der ersten und zweiten DC-Quelle 1.1, 1.2. Des Weiteren ist durch Steuerung der Differenzspannung Ud des Pufferkondensators 2.20 ein erster Differenzstrom Id1 über der ersten Speicherdrossel 2.4 und ein zweiter Differenzstrom Id2 über der zweiten Speicherdrossel 2.5 einstellbar.

Fall A Hochsteller, Eingangsspannung grösser Ausgangsspannung:

Die Differenzspannung Ud ist positiv, d.h. die Summe der Spannungen der beiden DC-Quellen Ust1, Ust2 ist grösser als die Ausgangsspannung Udc. Wenn der erste Schalter 2.72 eingeschaltet wird, fliessen positive Differenzströme Id1 und Id2, welche in den Speicherdrosseln 2.4, 2.5 gespeichert werden. Beim Ausschalten des ersten Schalters 2.72 werden der zweite und dritte Schalter 2.62, 2.82 eingeschaltet und die in den Speicherdrosseln 2.4, 2.5 gespeicherten Differenzströme Id1, Id2 fliessen über den zweiten und dritten Schalter 2.62, 2.82 zum Ausgangskondensator 2.9.

Parallel zu den Differenzströmen Id1, Id2 fliessen die DC-Ströme Ist1 und Ist2 von den DC-Quellen 1.1, 1.2 direkt zum Ausgangskondensator 2.9. Der DC-Ausgangsstrom Idc ist gleich der Summe aus DC-Strom und Differenatrom und ist positiv:

$$Idc = Ist1 + Id1 = Ist2 + Id2$$

In diesem Betrieb verhält sich der erfindungsgemässe Differenzsteller wie ein Hochsteller bzw. Aufwärtssteller.

Fall B Hochsteller, Eingangsspannung kleiner Ausgangsspannung:

In diesem Fall ist die Summe der Spannungen der DC-Quellen Ust1, Ust2 kleiner als die Ausgangsspannung Udc, die Differenzspannung Ud ist negativ, wobei die Ströme der DC-Quellen Ist1, Ist2 positiv sind, d.h. Energie wird von den DC-Quellenzum DC-Ausgang 3.1, 3.2 übertragen.

Wenn der zweite und dritte Schalter 2.62, 2.82 eingeschaltet werden, fliessen negative Differenutröme Id1 und Id2, welche in den Speicherdrosseln 2.4, .2.5 gespeichert werden, wobei der erste Schalter 2.72 ausgeschaltet ist. Beim anschliessenden Ausschalten des zweiten und dritten Schalters 2.62, 2.82 und beim gleichzeitigen Einschalten des ersten Schalters 2.72 fliessen die in den Speicherdrosseln 2.4, 2.5 gespeicherten Differenzströme Id1, Id2 über den ersten Schalter 2.72 zum Pufferkondensator 2.20.

Parallel zu den negativen Differenzströmen Id1, Id2 fliessen die positiven DC-Ströme Ist1, Ist2 von dem DC-Ausgang 3.1, 3.2 direkt zu den DC-Quellen 1.1, 1.2; in diesem Fall sind die Differenzströme Id1 und Id2 den DC-Strömen Ist1 bzw. Ist2 entgegen gerichtet, wobei der DC-Ausgangsstrom Idc dennoch positiv ist

In diesem Betrieb verhält sich der erfindungsgemässe Differenuteller ebenfalls wie ein Hochsteller bzw. Aufwärtssteller.

Fall C Abwärtssteller, Spannungen an DC-Quellen kleiner als Ausgangsspannung:

In diesem Fall ist die Summe der Spannungen an den DC-Quellen Ust1, Ust2 kleiner als die Ausgangsspannung Udc, die Differenzspannung Ud ist negativ und die DC-Ströme aus den DC-Quellen Ist1, Ist2 und der DC-Ausgangsstrom Idc sind negativ, d.h. Energie fliesst vom DC-Ausgang 3.1, 3.2, in die DC-Quellen 1.1, 1.2 hinein. Wenn der zweite und der dritte Schalter 2.62, 2.82 eingeschaltet werden, fliessen negative Differenzströme Id1 und Id2, welche in den Speicherdrosseln 2.4, 2.5 gespeichert werden; der erste Schalter 2.72 ist ausgeschaltet. Beim Ausschalten des zweiten und dritten Schalters 2.62, 2.82 und beim gleichzeitigen Einschalten des ersten Schalters 2.72 fliessen die in den Speicherdrosseln 2.4, 2.5 gespeicherten Differenutröme Id1, Id2 über den ersten Schalter 2.72 zum Pufferkondensator 2.20. Parallel zu den negativen Differenutrömen Id1 und Id2 fliessen die DC-Ströme Ist1 und Ist2 vom DC-Ausgang 3.1, 3.2 zu den DC-Quellen 1.1, 1.2 und laden diese auf. In diesem Fall sind die Differenzströme Id1 bzw. Id2 und die DC-Ströme Ist1, Ist2 gleichgerichtet und negativ und der Differenzsteller verhält sich wie ein Abwärtssteller.

Fall D Abwärtssteller, Spannungen an DC-Quellen grösser als Ausgangsspannung:

In diesem Fall ist die Summe der Spannungen an den DC-Quellen Ust1, Ust2 grösser als die DC-Ausgangsspannung Udc, die Differenzspannung Ud ist positiv und sowohl die DC-Ströme der DC-Quellen Ist1, Ist2 als auch der DC-Ausgangsstrom Idc sind negativ, d.h. Energie fliesst vom DC-Ausgang 3.1, 3.2 in die DC-Quellen 1.1, 1.2 hinein und die DC-Quellen 1.1, 1.2 werden geladen. Wenn der zweite und dritte Schalter 2.62, 2.82 eingeschaltet sind, fliessen positive Differenzströme Id1, Id2 welche in den Speicherdrossel 2.4, 2.5 gespeichert werden. Der erste Schalter 2.72 ist dabei ausgeschaltet. Beim Ausschalten des zweiten und dritten Schalters 2.62, 2.82 und beim gleichzeitigen Einschalten des ersten Schalters 2.72 fliessen die in den Speicherdrosseln 2.4, 2.5 gespeicherten Differenzströme Id1, Id2 über den ersten Schalter 2.72 zum Pufferkondensator 2.20. Parallel zu den positiven Differenutrömen Id1, Id2 fliessen die DC-Ströme Ist1, Ist2 vom DC-Ausgang 3.1, 3.2 zu den DC-Quellen 1.1, 1.2. In diesem Fall sind die Differenuttöme Id1, Id2 und die Ströme der DC-Quellen Ist1, Ist2 entgegengesetzt und der Ausgangsstrom Idc ist negativ.

Durch die beschriebenen Betriebsarten des erfindungsgemässen Differenzstellers wird deutlich, dass die Spannung jeder DC-Quelle 1.1, 1.2 Werte zwischen Null und der maximalen DC-Spannung Udc annehmen kann. Die Richtung der DC-Ströme Ist1 und Ist2 der DC-Quellen 1.1, 1.2 kann sowohl positive Werte (entladen) als auch negative Werte (laden) annehmen.

Eine Ausführungsform der Erfindung sieht vor, dass der Ausgangskondensator 2.9 und der Pufferkondensator 2.20 zusammen mit der ersten und der zweiten Speicherdrossel 2.4, 2.5 ein Filter bilden, welches dafür sorgt, dass die Oberwellen, verursacht durch die Arbeit der elektronischen Schalter 2.62, 2.72, 2.82, nicht an den DC-Quellen 1.1, 1.2 erscheinen und diese stören, und dass der Ausgangskondensator 2.9 zusammen mit den Speicherdrosseln 2.4, 2.5 ein Ausgangsfilter bildet, welches dafür sorgt, dass die Oberwellen, verursacht durch die Arbeit der elektronischen Schalter 2.62, 2.72, 2.82, nicht am DC-Ausgang 3.1, 3.2 erscheinen.

In einer weiteren Ausführungsform der Erfindung -wie sie Fig. 6 zeigt- ist vorgesehen, dass der bidirektionale DC-Steller einen zusätzlichen Kondensator 2.1 zwischen dem positiven Anschluss der ersten der ersten DC-Quelle 1.1 und dem positiven Anschluss der zweiten DC-Quelle 1.2 und einen zusätzlichen Kondensator 2.3 zwischen dem negativen Anschluss der ersten DC-Quelle 1.1 und dem negativen Anschluss der zweiten DC-Quelle 1.2 aufweist, wobei diese beiden zusätzlichen Kondensatoren 2.1, 2.3 die filterwirkung des Ausgangskondensators 2.9 und des Pufferkondensators 2.20 auf die Oberwellen, verursacht durch die Arbeit der elektronischen Schalter 2.62, 2.72, 2.82, verstärken, so dass diese Oberwellen nicht an den beiden DC-Quellen 1.1, 1.2 bzw. am DGAusgang 3.1, 3.2 erscheinen. Die Filterwirkung hat auch zur Folge, dass die elektromagnetische Strahlung (EMV-Belastung) der in den Figuren nicht gezeigten, äusseren Verkabelung vermieden werden kann.

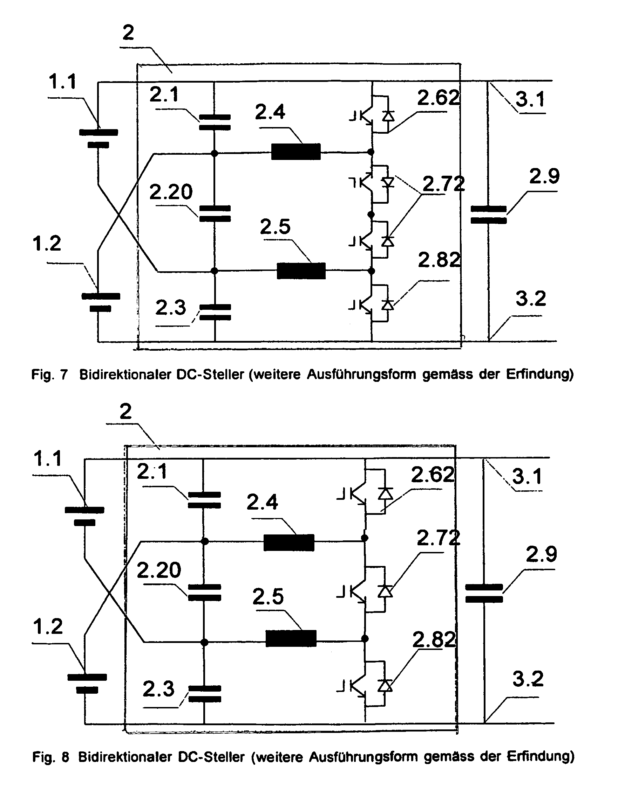

Die weitere Ausführungsform der Erfindung in Fig. 7 unterscheidet sich von derjenigen in Fig. 6 lediglich durch die Wahl des ersten, zweiten und dritten Schalters 2.72, 2.62, 2.82. Der Differenzsteller ist hier mit elektronischen zwangskommutierten Schaltern 2.72, 2.62, 2.82 ausgeführt, beispielsweise Transistoren, IGBTs, MOS, IGCTs. Diese werden vorzugsweise mit antiparallelen Dioden ausgestattet. Für den bidirektionalen zweiten und dritten Schalter 2.62, 2.82 sind je ein Transistor mit Diode ausreichend, für den ersten Schalter 2.72 sind zwei anti-seriell geschaltete Transistoren mit Diode notwendig.

Im Rahmen der Erfindung ist es auch denkbar, dass die erste und die zweite DC-Quelle 1.1, 1.2 aus je einem oder aus mehreren parallelen Solarpanels mit seriell geschalteten Solarzellen bestehen, und dass der erste und zweite DC-Strom Ist1, Ist2 über die Variation der Differenzspannung Ud bzw. durch das Schalten der elektronischen Schalter 2.62, 2.72, 2.82 so geregelt wird, dass die DC-Quellen 1.1, 1.2 die maximale PV-Leistung am DC-Ausgang 3.1, 3.2 abgeben (MPP Arbeitspunkt).

Die Einstellung des MPP-Arbeitspunktes wird durch die Modulation der Schalter 2.62, 2.72, 2.82 des Differenutellers erreicht. Die DC-Quellen-Spannung -oder auch Stringspannung genannt- Ust1, Ust2 kann von Null bis zu der maximalen DC-Ausgangsspannung Udc variieren. Der Arbeitsbereich der Stringspannung kann vergrössert werden durch die zusätzliche Variation der DC-Ausgangsspannung Udc. Bei tiefen Temperaturen kann Udc erhöht werden, da die Solarzellenspannung steigt. Dementsprechend kann bei hohen Temperaturen die DC-Ausgangsspannung Udc verkleinert werden.

Falls die Spannungen der DC-Quellen 1.1, 1.2 maximal um 50% des Wertes der DC-Ausgangsspannung Udc variieren, dann kann der Arbeitspunkt des Differenzstellers im Aufwärtssteller-Betrieb so gewählt werden, dass die Differenzspannung Ud über dem Pufferkondensator 2.20 nur positive Werte annehmen kann. Wie in Fig. 8 gezeigt, ist es in diesem Fall möglich, dass der erste Schalter 2.72 lediglich aus einem Transistor mit einer Diode ausgeführt ist. Die Differenzströme Id1, Id2 können sowohl positive als auch negative Werte annehmen.

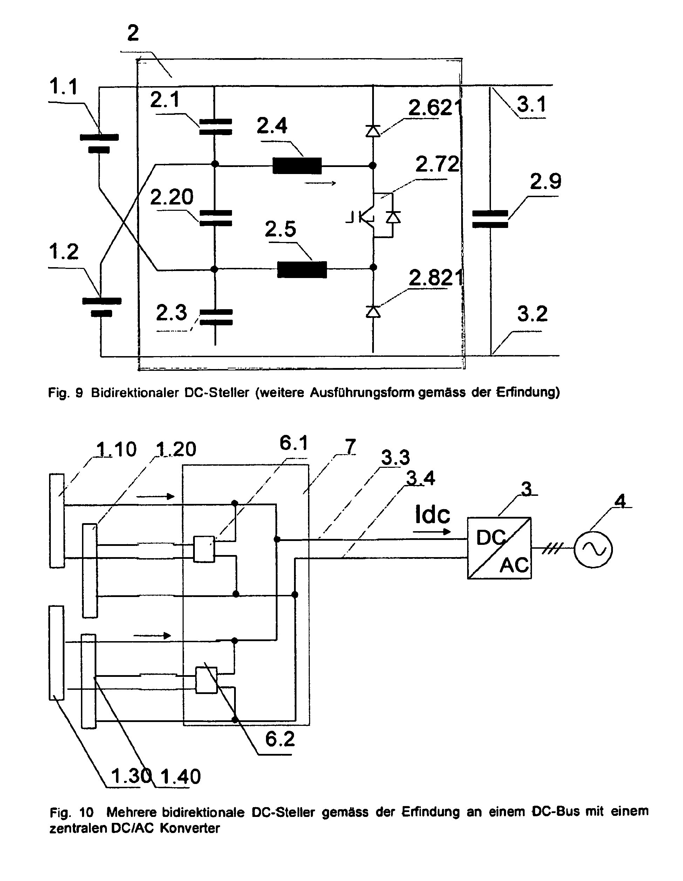

Wenn die Spannungen der DC-Quellen 1.1, 1.2 maximal um 50% des Wertes der DC-Ausgangsspannung Udc variieren, dann kann der Arbeitspunkt des Differenzstellers im Aufwärtssteller-Betrieb so gewählt werden, dass die Differenzspannung Ud über dem Pufferkondensator 2.20 und die Differenutröme Id1 und Id2 nur positive Werte annehmen können. Wie in Fig. 9 gezeigt, ist es in diesem Fall möglich, dass der zweite und der dritte Schalter 2.621, 2.821 lediglich aus Dioden ausgeführt sind und nur der erste Schalter 2.72 aus einem Transistor mit Diode besteht

Fig. 10 zeigt eine Anordnung von mehreren Differenzstellern 6.1, 6.2, die in einem oder mehreren String-Verteilern 7 nahe den DC-Quellen-Paaren 1.10, 1.20 und 1.30, 1.40 untergebracht werden können. Da die Verluste der erfindungsgemässen Differenzsteller 6.1, 6.2 und der Hardware-Aufwand geringer sind gegenüber konventionellen Anordnungen, kann auf eine Zwangskühlung verzichtet werden. Es können auch mehrere Differenzsteller 6.1, 6.2 zusammengefasst werden, indem diese parallel an gemeinsame DC-Schienen (DC-Kabel) 3.3, 3.4 angeschlossen werden.

Die Spannung jedes einzelnen Strings des DC-Quellen-Paars 1.10, 1.20 und 1.30, 1.40 wird auf eine höhere DC-Spannung hochgesetzt und anschliessend über die DCSchienen 3.3, 3.4 mit einem zentralen DC/AC-Konverter 3 verbunden; die Übertragung der PV-Leistung zum DC/AC-Konverter 3 erfolgt mittels einer höheren DC-Spannung Udc, d.h. der zu übertragende DC-Strom Idc wird kleiner. Infolgedessen können der Querschnitt der DC-Schienen 3.3, 3.4 und/oder die ohmschen Übertragungsverluste reduziert werden. Der DC/AC-Konverter 3 wird ebenfalls kostengünstiger, denn die höhere DC-Ausgangsspannung Udc ermöglich höhere AC-Spannungen Uac zum Netz 4 und tiefere Netz-Ströme.

**Patentansprüche**

1. Bidirektionaler DC-Steller für die Wandlung von elektrischer Energie einer ersten DC-Quelle (1.1) und einer zweiten DC-Quelle (1.2), umfassend einen Ausgangskondensator (2.9), wobei ein positiver Kontakt der ersten DC-Quelle (1.1) mit einem positiven DC-Ausgang (3.1) des bidirektionaler DC-Stellers und einem Anschluss des Ausgangskondensators (2.9) verbunden ist, und ein negativer Kontakt der zweiten DC-Quelle (1.2) mit einem negativen DC-Ausgang (3.2) des bidirektionalen DC-Stellers und dem zweiten Anschluss des Ausgangskondensators (2.9) verbunden ist, an welchem eine Ausgangsspa.nnung (Udc) anliegt, ferner umfassend eine erste und eine zweite Speicherdrossel (2.4, 2.5), wobei die erste Speicherdrossel (2.4) zwischen einem positiven Anschluss der zweiten DC-Quelle (1.2) und einem ersten Kontakt eines ersten elektronischen Schalters (2.72) angeordnet ist, und wobei die zweite Speicherdrossel (2.5) zwischen einem negativen Anschluss der ersten DC-Quelle (1.1) und einem zweiten Kontakt des ersten elektronischen. Schalters (2.72) angeordnet ist, **dadurch gekennzeichnet,**

   - **dass** zwischen dem negativen Ausgang der ersten DC-Quelle (1.1) und dem positiven Ausgang der zweiten DC-Quelle (1.2) ein Pufferkondensator (2.20) angeordnet ist,
   - **dass** in Serie zum ersten elektronischen Schalter (2.72) ein zweiter elektronsicher Schalter (2.62) und ein dritter elektronischer Schalter (2.82) angeordnet sind, wobei der zweite elektronische Schalter (2.62) zwischen dem ersten Kontakt des ersten elektronischen Schalters (2.72) und dem positiven DC-Ausgang (3.1) angeordnet ist und der dritte elektronische Schalter (2.82) zwischen dem zweiten Kontakt des ersten elektronischen Schalters (2.72) und dem negativen DC-Ausgang (3.2) angeordnet ist, wobei durch Einschalten und Ausschalten des ersten, zweiten bzw. dritten elektronischen Schalters (2.72, 2.62, 2.82) eine Differenzspannung (Ud) über dem Pufferkondensator (2.20) regelbar ist und ein erster DC-Strom (Ist1) der ersten DC-Quelle (1.1) und ein zweiter DC-Strom (Ist2) der zweiten DC-Quelle (1.2) von der ersten und zweiten DC-Quelle (1.1, 1.2) zum DC-Ausgang (3.1, 3.2) bzw. vom DC-Ausgang (3.1, 3.2) zu der ersten und zweiten DC-Quelle (1.1, 1.2) einstellbar ist

2. Bidirektionaler DC-Steller nach Anspruch 1, **dadurch gekennzeichnet, dass** durch Steuerung der Differenzspannung (Ud) des Pufferkondensators (2.20) ein erster Differenzstrom (Id1) über der ersten Speicherdrossel (2.4) und ein zweiter Differenzstrom (Id2) über der zweiten Speicherdrossel (2.5) einstellbar ist

3. Bidirektionaler DC-Steller nach Anspruch 2, **dadurch gekennzeichnet, dass** die Spannungen (Ust1, Ist2) der ersten und der zweiten DC-Quelle (1.1, 1.2) von Null bis zum maximalen Wert der Ausgangsspannung (Udc) variabel sind, ein Ausgangsstrom (Idc) am positiven bzw. negativen DC-Ausgang (3.1, 3.2), der erste und der zweite Differenzstrom (Id1, Id2) und die Differenzspannung (Ud) positive oder negative Werte annehmen können.

4. Bidirektionaler DC-Steller nach Anspruch 1 bis 3, **gekennzeichnet dadurch, dass** der Ausgangskondensator (2.9) und der Pufferkondensator (2.20) zusammen mit der ersten und der zweiten Speicherdrossel (2.4, 2.5) ein Filter bilden, welches dafür sorgt, dass die Oberwellen, verursacht durch die Arbeit der elektronischen Schalter (2.62, 2.72, 2.8.2), an den DC-Quellen (1.1, 1.2) signifikant reduziert werden, und dass der Ausgangskondensator (2.9) zusammen mit den Speicherdrosseln (2.4, 2.5) ein Ausgangsfilter bildet, welches dafür sorgt, dass die Oberwellen, verursacht durch die Arbeit der elektronischen Schalter (2.62, 2.72, 2.82), am DC-Ausgang (3.1, 3.2) signifikant reduziert werden.

5. Bidirektionaler DC-Steller nach Ansprüchen 1 bis 4, **gekennzeichnet dadurch, dass** ein zusätzlicher Kondensator (2.1) zwischen dem positiven Anschluss der ersten DC-Quelle (1.1) und dem positiven Anschluss der zweiten DC-Quelle (1.2) und ein zusätzlicher Kondensator (2.3) zwischen dem negativen Anschluss der ersten DC-Ouelle (1.1) und dem negativen Anschluss der zweiten DC-Quelle (1.2) geschaltet ist, wobei diese beiden zusätzlichen Kondensatoren (2.1, 2.3) die Filterwirkung des Ausgangskondensators (2.9) und des Pufferkondensators (2.20) auf die Oberwellen, verursacht durch die Arbeit der elektronischen Schalter (2.62, 2.72, 2.82), verstärken, so dass diese Oberwellen nicht an den beiden DC-Quellen (1.1, 1.2) bzw. am DC-Ausgang (3.1, 3.2) des bidirektionalen DC-Stellers erscheinen.

6. Bidirektionaler DC-Steller nach Ansprüchen 1 bis 5, **dadurch gekennzeichnet, dass** der zweite und der dritte elektronische Schalter (2.62, 2.82) aus je einem Transistor mit antiparalleler Diode ausgeführt ist, und dass der erste elektronische Schalter (2.72) aus zwei anti-seriell verbundenen Transistoren mit antiparallelen Dioden ausgeführt ist.

7. Bidirektionaler DC-Steller nach einem der Ansprüche 1 bis 6, **dadurch gekennzeichnet, dass** die erste und die zweite DC-Quelle (1.1, 1.2) aus je einem oder aus mehreren parallelen Solarpanels mit seriell geschalteten Solarzellen bestehen, und dass der erste und zweite DC-Strom (Ist1, Ist2) über die Variation der Differenzspannung (Ud) bzw. durch das Schalten der elektronischen Schalter (2.62, 2.72, 2.82) so geregelt wird, dass die DC-Quellen (1.1, 1.2) die maximale PV-Leistung am DC-Ausgang (3.1, 3.2) abgeben

8.  Bidirektionaler DC-Steller nach einem der Ansprüchen 1 bis 7, **dadurch gekennzeichnet, dass** sowohl die Differenzspannung (Ud) über dem Pufferkondensator (2.20) als auch der Differenzstrom (Id) nur positive Werte annehmen, der zweite und der dritte elektronische Schalter (2.62, 2.82) in diesem Fall aus je einer Diode ausgeführt werden, und dass der erste elektronische Schalter (2.72) aus einem Transistor mit oder ohne antiparalleler Diode ausgeführt ist.

## Claims

1.  A bidirectional DC-to-DC converter for converting electrical energy from a first DC source (1.1) and a second DC source (1.2), comprising an output capacitor (2.9), wherein a positive contact of the first DC source (1.1) is connected to a positive DC output (3.1) of the bidirectional DC-to-DC converter and a connection of the output capacitor (2.9), and a negative contact of the second DC source (1.2) is connected to a negative DC output (3.2) of the bidirectional DC-to-DC converter and the second connection of the output capacitor (2.9), at which an output voltage (Udc) is present, additionally comprising a first and a second smoothing choke (2.4, 2.5), wherein the first smoothing choke (2.4) is arranged between a positive connection of the second DC source (1.2) and a first contact of a first electronic switch (2.72), and wherein the second smoothing choke (2.5) is arranged between a negative connection of the first DC source (1.1) and a second contact of the first electronic switch (2.72), **characterized**

    - **in that** a buffer capacitor (2.20) is arranged between the negative output of the first DC source (1.1) and the positive output of the second DC source (1.2),
    - **in that** a second electronic switch (2.62) and a third electronic switch (2.82) are arranged in series with the first electronic switch (2.72), wherein the second electronic switch (2.62) is arranged between the first contact of the first electronic switch (2.72) and the positive DC output (3.1), and the third electronic switch (2.82) is arranged between the second contact of the first electronic switch (2.72) and the negative DC output (3.2),
    - wherein by switching on and off the first, second or third electronic switch (2.72, 2.62, 2.82), a differential voltage (Ud) across the buffer capacitor (2.20) can be regulated, and a first DC current (Ist1) of the first DC source (1.1) and a second DC current (Ist2) of the second DC source (1.2) from the first and second DC source (1.1, 1.2) to the DC output (3,1, 3.2) or from the DC output (3.1, 3.2) to the first and second DC source (1.1, 1.2) can be set.

2.  The bidirectional DC-to-DC converter as claimed in claim 1, **characterized in that**, by controlling the differential voltage (Ud) of the buffer capacitor (2.20), a first differential current (Id1) across the first smoothing choke (2.4) and a second differential current (Id2) across the second smoothing choke (2.5) can be set.

3.  The bidirectional DC-to-DC converter as claimed in claim 2, **characterized in that** the voltages (Ust1, Ust2) of the first and second DC source (1.1, 1.2) are variable from zero to the maximum value for the output voltage (Udc), an output current (Idc) at the positive or negative DC output (3.1, 3.2), the first and second differential current (Id1, Id2) and the differential voltage (Ud) can assume positive or negative values.

4.  The bidirectional DC-to-DC converter as claimed in claims 1 to 3, **characterized in that** the output capacitor (2.9) and the buffer capacitor (2.20) together with the first and second smoothing chokes (2.4, 2.5) form a filter, which ensures that the harmonics, caused by the work of the electronic switches (2.62, 2.72, 2.82), do not appear at the DC sources (1.1, 1.2) and disrupt said DC sources, and **in that** the output capacitor (2.9), together with the smoothing chokes (2.4, 2.5), forms an output filter which ensures that the harmonics, caused by the work of the electronic switches (2.62, 2.72, 2.82), do not appear at the DC output (3.1, 3.2).

5.  The bidirectional DC-to-DC converter as claimed in claims 1 to 4, **characterized in that** an additional capacitor (2.1) is connected between the positive connection of the first DC source (1.1) and the positive connection of the second DC source (1.2), and an additional capacitor (2.3) is connected between the negative connection of the first DC source (1.1) and the negative connection of the second DC source (1.2), wherein these two additional capacitors (2.1, 2.3) intensify the filtering effect of the output capacitor (2.9) and the buffer capacitor (2.20) on the harmonics, caused by the work of the electronic switches (2.62, 2.72, 2.82), with the result that these harmonics do not appear at the two DC sources (1.1, 1.2) or at the DC output (3.1, 3.2) of the bidirectional DC-to-DC converter.

6. The bidirectional DC-to-DC converter as claimed in claims 1 to 5, **characterized in that** the second and third electronic switches (2.62, 2.82) are each formed from a transistor with an anti-parallel diode, and **in that** the first electronic switch (2.72) is formed from two anti-series connected transistors with anti-parallel diodes.

7. The bidirectional DC-to-DC converter as claimed in one of claims 1 to 6, **characterized in that** the first and second DC sources (1.1, 1.2) each comprise one or more parallel solar panels with series-connected solar sells, and **in that** the first and second DC currents (Ist1, Ist2) are regulated via the variation in the differential voltage (Ud) or by switching the electronic switches (2.62, 2.72, 2.82) in such a way that the DC sources (1.1, 1.2) emit the maximum PV power at the DC output (3.1, 3.2) (MPP working point).

8. The bidirectional DC-to-DC converter as claimed in one of claims 1 to 7, **characterized in that** both the differential voltage (Ud) across the buffer capacitor (2.20) and the differential current (Id) only assume positive values, the second and third electronic switches (2.62, 2.82) in this case are each formed from a diode, and **in that** the first electronic switch (2.72) is formed from a transistor with or without anti-parallel diode.

## Revendications

1. Actionneur bidirectionnel à courant continu pour la conversion d'énergie électrique d'une première source de courant continu (1.1) et d'une deuxième source de courant continu (1.2), comprenant un condensateur de sortie (2.9), un contact positif de la première source de courant continu (1.1) étant connecté à une sortie à courant continu positive (3.1) de l'actionneur bidirectionnel à courant continu et à une borne du condensateur de sortie (2.9), et un contact négatif de la deuxième source de courant continu (1.2) étant connecté à une sortie à courant continu négative (3.2) de l'actionneur bidirectionnel à courant continu et à la deuxième borne du condensateur de sortie (2.9), à laquelle une tension de sortie (Udc) est appliquée, comprenant en outre des première et deuxième bobines d'arrêt (2.4, 2.5), la première bobine d'arrêt (2.4) étant disposée entre une borne positive de la deuxième source de courant continu (1.2) et un premier contact d'un premier commutateur électronique (2.72), et la deuxième bobine d'arrêt (2.5) étant disposée entre une borne négative de la première source de courant continu (1.1) et un deuxième contact du premier commutateur électronique (2.72), **caractérisé en ce que**

- un condensateur tampon (2.20) est disposé entre la sortie négative de la première source de courant continu (1.1) et la sortie positive de la deuxième source de courant continu (1.2),
- un deuxième commutateur électronique (2.62) et un troisième commutateur électronique (2.82) sont disposés en série avec le premier commutateur électronique (2.72), le deuxième commutateur électronique (2.62) étant disposé entre le premier contact du premier commutateur électronique (2.72) et la sortie à courant continu positive (3.1) et le troisième commutateur électronique (2.82) étant disposé entre le deuxième contact du premier commutateur électronique (2.72) et la sortie à courant continu négative (3.2), une tension de différence (Ud) pouvant être régulée par fermeture et ouverture des premier, deuxième ou troisième commutateurs électroniques (2.72, 2.62, 2.82) aux bornes du condensateur tampon (2.20) et un premier courant continu (Ist1) de la première source courant continu (1.1) et un deuxième courant continu (Ist2) de la deuxième source de courant continu (1.2) peut être établi depuis les première et deuxième sources de courant continu (1.1, 1.2) vers la sortie à courant continu (3.1, 3.2) ou depuis la sortie à courant continu (3.1, 3.2) vers les première et deuxième sources de courant continu (1.1, 1.2).

2. Actionneur bidirectionnel à courant continu selon la revendication 1, **caractérisé en ce qu'**en commandant la tension de différence (Ud) du condensateur tampon (2.20), un premier courant de différence (Id1) peut être établi aux bornes de la première bobine d'arrêt (2.4) et un deuxième courant de différence (Id2) peut être établi aux bornes de la deuxième bobine d'arrêt (2.5).

3. Actionneur bidirectionnel à courant continu selon la revendication 2, **caractérisé en ce que** les tensions (Ust1, Ust2) des première et deuxième sources de courant continu (1.1, 1.2) peuvent varier de zéro à une valeur maximale de la tension de sortie (Udc), et **en ce qu'**un courant de sortie (Idc) sur la sortie à courant continu positive ou négative (3.1, 3.2), les premier et deuxième courants de différence (Id1, Id2) et la tension de différence (Ud) peuvent présenter des valeurs positives ou négatives.

4. Actionneur bidirectionnel à courant continu selon les revendications 1 à 3, **caractérisé en ce que** le condensateur de sortie (2.9) et le condensateur tampon (2.20) forment en association avec les première et deuxième bobines d'arrêt (2.4, 2.5) un filtre ayant pour effet de réduire de manière significative les harmoniques provoqués par le fonctionnement des commutateurs électroniques (2.62, 2.72, 2.82) sur les sources de courant continu (1.1, 1.2), et **en ce que** le condensateur de sortie (2.9) forme en association avec les bobines d'arrêt (2.4, 2.5) un filtre de sortie ayant pour effet de réduire de manière significative les harmoniques provoqués par le fonctionnement des commutateurs électroniques (2.62, 2.72, 2.82) à la sortie à courant continu (3.1, 3.2).

5. Actionneur bidirectionnel à courant continu selon les revendications 1 à 4, **caractérisé en ce qu'**un condensateur supplémentaire (2.1) est connecté entre la borne positive de la première source de courant continu (1.1) et la borne positive de la deuxième source de courant continu (1.2) et **en ce qu'**un condensateur supplémentaire (2.3) est connecté entre la borne négative de la première source de courant continu (1.1) et la borne négative de la deuxième source de courant continu (1.2), ces deux condensateurs supplémentaires (2.1, 2.3) amplifiant l'effet de filtrage du condensateur de sortie (2.9) et du condensateur tampon (2.20) sur les harmoniques provoqués par le fonctionnement des commutateurs électroniques (2.62, 2.72, 2.82), de telle sorte que ces harmoniques n'apparaissent pas sur les deux sources de courant continu (1.1, 1.2) ou à la sortie à courant continu (3.1, 3.2) de l'actionneur bidirectionnel à courant continu.

6. Actionneur bidirectionnel à courant continu selon les revendications 1 à 5, **caractérisé en ce que** les deuxième et troisième commutateurs électroniques (2.62, 2.82) sont chacun réalisés à partir d'un transistor avec une diode antiparallèle et **en ce que** le premier commutateur électronique (2.72) est réalisé à partir de deux transistors connectés en antisérie avec des diodes antiparallèles.

7. Actionneur bidirectionnel à courant continu selon l'une quelconque des revendications 1 à 6, **caractérisé en ce que** les première et deuxième sources de courant continu (1.1, 1.2) sont respectivement constituées d'un ou plusieurs panneaux solaires parallèles comportant des cellules solaires connectées en série, et **en ce que** les premier et deuxième courants continus (Ist1, Ist2) sont régulés par l'intermédiaire de la variation de la tension de différence (Ud) ou par commutation des commutateurs électroniques (2.62, 2.72, 2.82) de telle manière que les sources de courant continu (1.1, 1.2) délivrent la puissance PV maximale sur la sortie à courant continu (3.1, 3.2).

8. Actionneur bidirectionnel à courant continu selon l'une quelconque des revendications 1 à 7, **carac-**

térisé en ce que la tension de différence (Ud) aux bornes du condensateur tampon (2.20) ainsi que le courant de différence (Id) ne présentent que des valeurs positives, **en ce que** les deuxième et troisième commutateurs électroniques (2.62, 2.82) sont dans ce cas respectivement réalisés à partir d'une diode, et **en ce que** le premier commutateur électronique (2.72) est réalisé à partir d'un transistor avec ou sans diode antiparallèle.

Fig. 1: DC-DC-Aufwärtssteller – Stand der Technik

Fig. 2: DC-DC-Abwärtssteller – Stand der Technik

Fig. 3: Bidirektionaler DC-DC-Steller – Stand der Technik

Fig. 4 Unipolarer Aufwärtssteller für zwei DC-Quellen – Stand der Technik

Fig. 5 Bidirektionaler DC-Steller (Differenzsteller, D-Steller) gemäss der Erfindung

Fig. 6 Bidirektionaler DC-Steller (eine Ausführungsform gemäss der Erfindung)

Fig. 7  Bidirektionaler DC-Steller (weitere Ausführungsform gemäss der Erfindung)

Fig. 8  Bidirektionaler DC-Steller (weitere Ausführungsform gemäss der Erfindung)

EP 2 517 344 B1

Fig. 9  Bidirektionaler DC-Steller (weitere Ausführungsform gemäss der Erfindung)

Fig. 10  Mehrere bidirektionale DC-Steller gemäss der Erfindung an einem DC-Bus mit einem zentralen DC/AC Konverter

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004037446 B4
- WO 2006011071 A
- EP 2148419 A2
- KR 20090128973
- DE 102008059330

- US 2010133904 A
- EP 2173024 A2
- DE 10136147 B4
- JP 9261949 B